# EUROPEAN PATENT APPLICATION

(11) **EP 3 285 114 A1**
(43) Date of publication of application: **21.02.2018**
(21) Application number: 17179960.4
(22) Date of filing: 06.07.2017
(51) Int. Cl.: G02F 1/153

(54) **REAR-VIEW MIRROR AND DRIVING AUXILIARY APPARATUS**

(30) Priority: 17.08.2016 TW 105126181
(71) Applicant: Unidisplay Inc., Hsinchu County 310 (TW)
(72) Inventor: LIN, Shih-Yao, 302 Hsinchu County (TW); HSU, Ming-Yuan, 420 Taichung City (TW); CHAN, Meng-Chia, 414 Taichung City (TW); LIN, Chun-Heng, 412 Taichung City (TW); LIN, Sheng-Hsien, 741 Tainan City (TW)
(74) Representative: Becker Kurig Straus

(57) **Abstract**

A rear-view mirror installed in a transport vehicle is provided. The rear-view mirror includes a first substrate, a second substrate, an electrochromic material layer, a light-transmitting electrode, a reflective layer, and a transparent conductive layer. The second substrate is opposite to the first substrate. The electrochromic material layer is disposed between the first substrate and the second substrate. The light-transmitting electrode is disposed between the first substrate and the electrochromic material layer. The electrochromic material layer is disposed between the first substrate and the reflective layer. The transparent conductive layer is disposed between the electrochromic material layer and the reflective layer. In addition, a driving auxiliary apparatus is also provided.

## Description

### BACKGROUND OF THE INVENTION

### Field of the Invention

The invention relates to an auxiliary apparatus, and more particularly, to a rear-view mirror and a driving auxiliary apparatus.

### Description of Related Art

Electrochromism refers to the stable and reversible change occurring to the optical properties (such as transmittance, reflectance, and absorbance) of an electrochromic material layer in the visible light wavelength range when external voltage or current is applied such that the electrochromic material layer can display changes in color and transparency. The electrochromic technique can be applied in many situations, such as energy-saving windows, rear-view mirrors, and display devices.

Using the vehicle rear-view mirror as an example, the vehicle rear-view mirror includes a first substrate, a light-transmitting electrode disposed on the first substrate, a second substrate opposite to the first substrate, a reflective film disposed on the second substrate, and an electrochromic material layer disposed between the first substrate and the second substrate. When the electrochromic material layer is enabled, an electrochemical redox reaction occurs to the electrochromic material layer such that the energy level thereof is changed, and the electrochromic material layer enters a dimming state. When the intensity of the external light is too great such that the driver's line of sight is affected and when the light reaches the electrochromic material layer of the vehicle rear-view mirror, the external light is absorbed by the electrochromic material layer such that the electrochromic material layer is in the dimming state, and as a result the vehicle rear-view mirror is switched to anti-glare mode. Moreover, when the electrochromic material layer is not enabled, the electrochromic material layer is in a light-transmission state. At this point, the external light passes through the electrochromic material layer and is reflected by the reflective film of the vehicle rear-view mirror such that the vehicle rear-view mirror is switched to mirror mode.

In general, the material of the reflective film adopts a metal material having high reflectance. The reflective film is not only used to reflect external light, but also drives the electrochromic material layer with the light-transmitting electrode such that the electrochromic material layer is in the dimming state. In general, the electrochromic material layer can be made from an organic or inorganic material. When the electrochromic material layer is made from an organic material, the electrochromic material layer most likely includes a liquid electrolyte or an organic polymer electrolyte and is packaged between two substrates with the electrolyte. However, the liquid electrolyte or the organic polymer electrolyte has a certain corrosive effect to the reflective film made from a metal material, and therefore the reflective film is not suitable for long-term use, and the organic substance is prone to leakage. Therefore, the service life of the vehicle rear-view mirror is shorter.

### SUMMARY OF THE INVENTION

The invention provides a rear-view mirror having longer service life.

The invention provides a driving auxiliary apparatus having longer service life.

The rear-view mirror of the invention is installed in a transport vehicle. The rear-view mirror includes a first substrate, a second substrate, an electrochromic material layer, a light-transmitting electrode, a reflective layer, and a transparent conductive layer. The second substrate is opposite to the first substrate. The electrochromic material layer is disposed between the first substrate and the second substrate. The light-transmitting electrode is disposed between the first substrate and the electrochromic material layer. The electrochromic material layer is disposed between the first substrate and the reflective layer. The transparent conductive layer is disposed between the electrochromic material layer and the reflective layer.

In an embodiment of the invention, the first substrate has a surface distant from the second substrate. External light enters the rear-view mirror from the surface and the rear-view mirror reflects the external light such that the external light exits the rear-view mirror from the surface. The reflectance of the rear-view mirror to external light is greater than 45%.

In an embodiment of the invention, the rear-view mirror further includes an auxiliary reflective layer disposed between the reflective layer and the second substrate.

In an embodiment of the invention, the auxiliary reflective layer contains at least one material selected from the group consisting of chromium, titanium, and molybdenum or an alloy thereof, or contains silicon dioxide or a transparent conductive material.

In an embodiment of the invention, the second substrate is disposed between the transparent conductive layer and the reflective layer.

In an embodiment of the invention, the reflective layer contains at least one material selected from the group consisting of silver, copper, aluminum, titanium, and molybdenum or an alloy thereof.

In an embodiment of the invention, the transparent conductive layer contains at least one material selected from the group consisting of indium tin oxide and fluorine-doped tin oxide.

The driving auxiliary apparatus of the invention is installed in a transport vehicle. The driving auxiliary apparatus includes a rear-view mirror and a display. The rear-view mirror includes a first substrate, a second substrate, an electrochromic material layer, a light-transmitting electrode, a reflective layer, and a transparent conductive layer. The second substrate is opposite to the first substrate. The electrochromic material layer is disposed between the first substrate and the second substrate. The light-transmitting electrode is disposed between the first substrate and the electrochromic material layer. The electrochromic material layer is disposed between the first substrate and the reflective layer. The transparent conductive layer is disposed between the electrochromic material layer and the reflective layer. Moreover, the display is disposed adjacent to the rear-view mirror and located at a side of the second substrate distant from the first substrate.

In an embodiment of the invention, the first substrate has a surface distant from the second substrate. External light enters the rear-view mirror from the surface and the rear-view mirror reflects the external light such that the external light exits the rear-view mirror from the surface. The display is used to emit an image light, and the image light exits the rear-view mirror from the surface after passing through the rear-view mirror. The reflectance of the rear-view mirror to external light is greater than 40%, and the transmittance of the rear-view mirror to the image light is greater than 15%.

In an embodiment of the invention, the auxiliary reflective layer contains at least one material selected from the group consisting of chromium, titanium, aluminum, molybdenum, and silver or an alloy thereof, or contains silicon dioxide or a transparent conductive material.

Based on the above, in the driving auxiliary apparatus and the rear-view mirror of an embodiment of the invention, the transparent conductive layer is disposed between the electrochromic material layer and the reflective layer. The reflective layer can drive the electrochromic material layer with the light-transmitting electrode via the transparent conductive layer such that the electrochromic material layer is in a dimming state, and external light can also be reflected on the reflective layer after passing through the transparent conductive layer and then exit the rear-view mirror after passing through the transparent conductive layer. Moreover, when the electrochromic material layer is made from an organic material, the transparent conductive layer can prevent direct contact between the electrochromic material layer and the reflective layer so as to prevent corrosion to the reflective layer from the organic material. As a result, the driving auxiliary apparatus and the rear-view mirror have longer service lives.

In order to make the aforementioned features and advantages of the disclosure more comprehensible, embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A shows a three-dimensional diagram of a driving auxiliary apparatus of an embodiment of the invention.
FIG. 1B shows a cross-sectional diagram of the driving auxiliary apparatus of FIG. 1A along line A-A'.
FIG. 2 shows a cross-sectional diagram of a driving auxiliary apparatus of another embodiment of the invention.
FIG. 3 shows a cross-sectional diagram of a driving auxiliary apparatus of yet another embodiment of the invention.
FIG. 4 shows a cross-sectional diagram of a driving auxiliary apparatus of still yet another embodiment of the invention.
FIG. 5 shows a cross-sectional diagram of a driving auxiliary apparatus of another embodiment of the invention.

### DESCRIPTION OF THE EMBODIMENTS

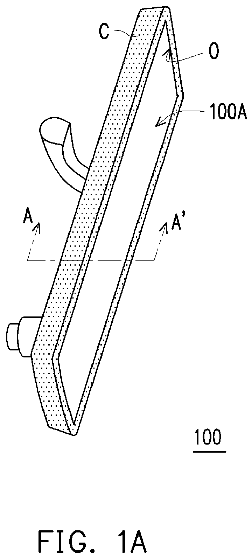

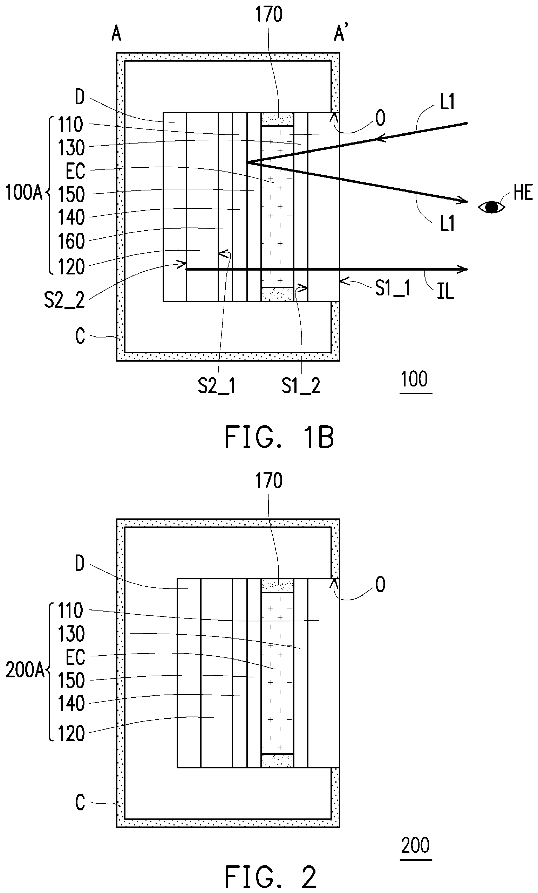

FIG. 1A shows a three-dimensional diagram of a driving auxiliary apparatus of an embodiment of the invention, and FIG. 1B shows a cross-sectional diagram of the driving auxiliary apparatus of FIG. 1A along line A-A'. Please refer to FIG. 1A and FIG. 1B. In the present embodiment, a driving auxiliary apparatus 100 includes a rear-view mirror 100A and a display D (as shown in FIG. 1B), and the display D is, for instance, disposed adjacent to the rear-view mirror 100A. The driving auxiliary apparatus 100 is installed in a transport vehicle to assist the driving of the transport vehicle or provide driving-related information to the transport vehicle. For instance, the transport vehicle is a car. The driving auxiliary apparatus 100 is installed inside the car, and the rear-view mirror 100A of the driving auxiliary apparatus 100 is, for instance, an internal rear-view mirror to assist the car driver in learning the positions of other cars. Moreover, the display D can be used to provide driving information or traffic information to the car driver. However, in some embodiments, the driving auxiliary apparatus 100 can also be installed outside the car, and the rear-view mirror 100A of the driving auxiliary apparatus 100 can be, for instance, an external rear-view mirror. In other embodiments, the rear-view mirror 100A can be not used with the display D and is installed in the transport vehicle on its own, and the invention is not limited thereto. In addition, the transport vehicle is not limited to a car, and the transport vehicle can also refer to other types of transport vehicles such as boats, trains, and airplanes.

In the present embodiment, the rear-view mirror 100A and the display D can be, for instance, assembled in a same housing C, and the housing C has an opening O. Specifically, the opening O of the housing C is overlapped with the reflective layer 140 of the rear-view mirror 100A, and therefore external light can be transmitted to the reflective layer 140 located in the housing C after passing through the opening O, such that the rear-view mirror 100A displays the function of a reflective mirror. When the car driver is driving, the driver faces, for instance, the opening O, and the driver can see the external light reflected by the rear-view mirror 100A to learn the positions of the cars behind. Moreover, the driving auxiliary apparatus 100 can be used with, for instance, a driving recorder (not shown) to record the image in front of the driver. The driving recorder can convert the image in front of the driver into a corresponding driving image information and store the driving image information or provide the driving image information to the driver via the display D, and the invention is not limited thereto.

Please refer further to FIG. 1B. In the present embodiment, the rear-view mirror 100A of the driving auxiliary apparatus 100 includes a first substrate 110 and a second substrate 120, and the second substrate 120 is opposite to the first substrate 110. Specifically, the first substrate 110 and the second substrate 120 are transparent substrates, and the material of the first substrate 110 and the second substrate 120 is, for instance, glass. However, in other embodiments, the material of the first substrate 110 and the second substrate 120 can also be, for instance, plastic, quartz, or other suitable materials, and the invention is not limited thereto.

Moreover, in the present embodiment, the rear-view mirror 100A further includes a light-transmitting electrode 130 and a reflective layer 140. Specifically, the light-transmitting electrode 130 is disposed on a surface S1_2 of the first substrate 110 facing the second substrate 120, and the reflective layer 140 is disposed on a surface S2_1 of the second substrate 120 facing the first substrate 110. Moreover, the light-transmitting electrode 130 and the reflective layer 140 can, for instance, respectively comprehensively cover the surface S1_2 of the first substrate 110 and the surface S2_1 of the second substrate 120, and the invention is not limited thereto. In the present embodiment, the material of the light-transmitting electrode 130 can be metal oxide such as indium tin oxide, indium zinc oxide, aluminum tin oxide, aluminum zinc oxide, indium germanium zinc oxide, other suitable oxides, or stacked layers of at least two of the above. Moreover, the reflective layer 140 can be conductive, and the reflective layer 140 contains at least one material selected from the group consisting of silver (Ag), copper (Cu), aluminum (Al), titanium (Ti), and molybdenum (Mo) or an alloy thereof. Alternatively, the light-transmitting electrode 130 and the reflective layer 140 can also contain other types of materials, and the invention is not limited thereto.

In the present embodiment, the rear-view mirror 100A further includes an electrochromic material layer EC disposed between the first substrate 110 and the second substrate 120 and disposed between the first substrate 110 and the reflective layer 140. Specifically, the light-transmitting electrode 130 is disposed between the first substrate 110 and the electrochromic material layer EC, and the reflective layer 140 of the present embodiment is disposed between the second substrate 120 and the electrochromic material layer EC. Moreover, in the present embodiment, the rear-view mirror 100A further includes a seal 170. The seal 170 is located between the first substrate 110 and the second substrate 120 and surrounds the electrochromic material layer EC. The seal 170, the first substrate 110, and the second substrate 120 are used to package the electrochromic material layer EC together. In the present embodiment, the electrochromic material layer EC is, for instance, made from an organic material. However, in other embodiments, the electrochromic material layer EC can also be made from an inorganic material, and the invention is not limited thereto.

In the present embodiment, the rear-view mirror 100A further includes a transparent conductive layer 150 disposed between the electrochromic material layer EC and the reflective layer 140. Specifically, the transparent conductive layer 150, for instance, isolates contact between the reflective layer 140 and the electrochromic material layer EC, and the seal 170, the light-transmitting electrode 130, and the transparent conductive layer 150 are used to package the electrochromic material layer EC together. In the present embodiment, the transparent conductive layer 150 contains at least one material selected from the group consisting of indium tin oxide and fluorine-doped tin oxide.

In the present embodiment, the reflective layer 140 can drive the electrochromic material layer EC with the light-transmitting electrode 130 via the transparent conductive layer 150. Specifically, a wire or a conductive structure can be optionally disposed in the rear-view mirror 100A such that the rear-view mirror 100A is respectively connected to the light-transmitting electrode 130 and the reflective layer 140. The light-transmitting electrode 130 and the reflective layer 140 can be electrically connected to a drive unit providing a driving signal respectively via the wire or the conductive structure to drive the electrochromic material layer EC.

When the electrochromic material layer EC is enabled (such as the potential difference between the reflective layer 140 and the light-transmitting electrode 130 is sufficient), an electrochemical redox reaction occurs to the electrochromic material layer EC such that the energy level thereof is changed and the electrochromic material layer EC enters a dimming state. When an external light L1 passes through the opening O of the housing C and reaches the electrochromic material layer EC, the external light L1 is absorbed by the electrochromic material layer EC in the dimming state such that the rear-view mirror 100A is switched to anti-glare mode. Moreover, when the electrochromic material layer EC is not enabled (such as the potential difference between the reflective layer 140 and the light-transmitting electrode 130 is insufficient), the electrochromic material layer EC is in a light-transmission state. At this point, the external light L1 passing through the opening O of the housing C passes through the electrochromic material layer EC and is reflected by the reflective layer 140, such that the rear-view mirror 100A is switched to mirror mode.

Specifically, the first substrate 110 has a surface S1_1 distant from the second substrate 120. The external light L1 from other cars behind enters the rear-view mirror 100A via, for instance, the surface S1_1, and the rear-view mirror 100A reflects the external light L1 such that the external light L1 exits the rear-view mirror 100A via the surface S1_1. Moreover, an eye HE of the car driver can receive the external light L1 reflected by the rear-view mirror 100A such that the car driver can learn the positions of other cars behind. Moreover, a suitable material and a suitably-designed thickness can be selected for the reflective layer 140, such that the reflective layer 140 has the optical property of partial transmission and partial reflection. Specifically, the display D of the driving auxiliary apparatus 100 is disposed at a side of the second substrate 120 distant from the first substrate 110, such as a surface S2_2 of the second substrate 120 distant from the first substrate 110. Since the reflective layer 140 has the optical property of partial transmission and partial reflection, an image light IL emitted by the display D can pass through the reflective layer 140 such that the user can see the internal image displayed by the display D. Moreover, the display D can be used to provide driving information or traffic information to the car driver. In other words, the rear-view mirror 100A of the driving auxiliary apparatus 100 can be used to provide the external light L1 from other cars behind and the image light IL from the display D to the car driver at the same time to achieve good drive-assist effect. In the present embodiment, the display D is, for instance, a liquid crystal display (LCD), or the display D can also be other types of displays such as an organic light-emitting diode (OLED) display, and the invention is not limited thereto.

In the present embodiment, the rear-view mirror 100A can optionally include an auxiliary reflective layer 160 disposed between the transparent conductive layer 150 and the second substrate 120. Specifically, the auxiliary reflective layer 160 is, for instance, disposed between the reflective layer 140 and the second substrate 120, and the auxiliary reflective layer 160 is used to assist in adjusting the overall optical transmission and reflection properties of the rear-view mirror 100A. For instance, the external light L1 enters the rear-view mirror 100A from the surface S1_1, and the rear-view mirror 100A reflects the external light L1 such that the external light L1 exits the rear-view mirror 100A via the surface S1_1. Moreover, the display D is used to emit the image light IL, and the image light IL exits the rear-view mirror 100A from the surface S1_1 after passing through the rear-view mirror 100A. In the present embodiment, to provide the image light IL having sufficient brightness to the car driver, the reflectance of the rear-view mirror 100A to the external light L1 is, for instance, greater than 40%, and the transmittance of the rear-view mirror 100A to the external light IL is, for instance, greater than 15%. However, in some embodiments, when the rear-view mirror 100A is not used with the display D and is used alone, the reflectance of the rear-view mirror 100A to the external light L1 can be, for instance, greater than 45%. Moreover, the auxiliary reflective layer 160 can also be used as an adhesion layer between the reflective layer 140 and the second substrate 120 to facilitate the adhesion of the reflective layer 140 on the second substrate 120. In the present embodiment, the auxiliary reflective layer 160 contains at least one material selected from the group consisting of chromium (Cr), Ti, and Mo or an alloy thereof, or the auxiliary reflective layer 160 can also contain other types of materials to adjust the overall optical transmission and reflection properties of the rear-view mirror 100A. For instance, the auxiliary reflective layer 160 contains at least one material selected from the group consisting of Cr, Ti, Al, Mo, and Ag or an alloy thereof, or contains silicon dioxide or a transparent conductive material. In some embodiments, the auxiliary reflective layer 160 contains, for instance, indium tin oxide. Alternatively, in some embodiments, the auxiliary reflective layer 160 can also be other metal oxides, and the invention is not limited thereto.

Specifically, since the external light L1 can be reflected by the reflective layer 140 after passing through the transparent conductive layer 150 and then exit the rear-view mirror 100A after passing through the transparent conductive layer 150, and the image light IL from the display D can pass through the reflective layer 140 and the transparent conductive layer 150, the position of the transparent conductive layer 150 does not affect the driving auxiliary apparatus 100 in providing the external light L1 and the image light IL to the car driver. Moreover, in the present embodiment, when the electrochromic material layer EC of the rear-view mirror 100A is made from an organic material, the transparent conductive layer 150 can be used as an anti-oxidation layer of the reflective layer 140. The transparent conductive layer 150 can prevent direct contact between the electrochromic material layer EC and the reflective layer 140 so as to prevent corrosion to the reflective layer 140 from the organic material. As a result, the driving auxiliary apparatus 100 and the rear-view mirror 100A have longer service lives.

FIG. 2 shows a cross-sectional diagram of a driving auxiliary apparatus of another embodiment of the invention. Please refer to FIG. 2. A driving auxiliary apparatus 200 of the embodiment of FIG. 2 is similar to the driving auxiliary apparatus 100 of the embodiment of FIG. 1A to FIG. 1B. The driving auxiliary apparatus 200 of the embodiment of FIG. 2 and components and relevant descriptions thereof are as provided for the driving auxiliary apparatus 100 of the embodiment of FIG. 1A to FIG. 1B and are not repeated herein. The difference of the driving auxiliary apparatus 200 of the embodiment of FIG. 2 and the driving auxiliary apparatus 100 of the embodiment of FIG. 1A to FIG. 1B is as described below. A rear-view mirror 200A of the driving auxiliary apparatus 200 of the embodiment of FIG. 2 does not have the auxiliary reflective layer 160 of the embodiment of FIG. 1A to FIG. 1B.

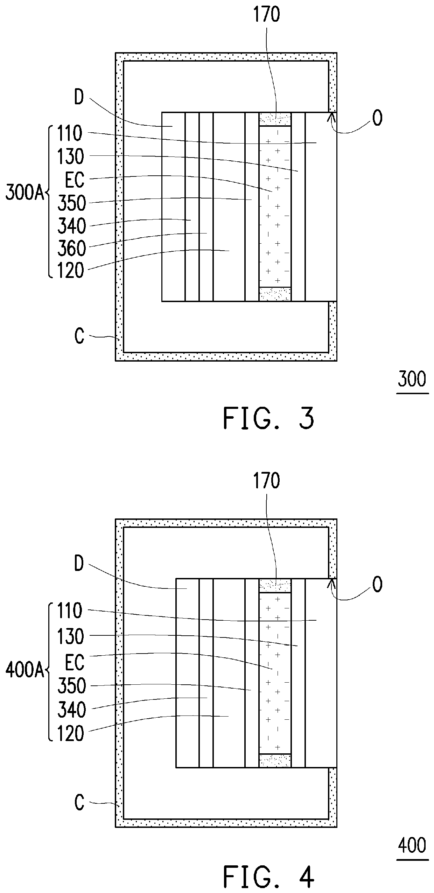

FIG. 3 shows a cross-sectional diagram of a driving auxiliary apparatus of yet another embodiment of the invention. Please refer to FIG. 3. A driving auxiliary apparatus 300 of the embodiment of FIG. 3 is similar to the driving auxiliary apparatus 100 of the embodiment of FIG. 1A to FIG. 1B. The driving auxiliary apparatus 300 of the embodiment of FIG. 3 and components and relevant descriptions thereof are as provided for the driving auxiliary apparatus 100 of the embodiment of FIG. 1A to FIG. 1B and are not repeated herein. The difference of the driving auxiliary apparatus 300 of the embodiment of FIG. 3 and the driving auxiliary apparatus 100 of the embodiment of FIG. 1A to FIG. 1B is as described below. In a rear-view mirror 300A of the driving auxiliary apparatus 300 of the embodiment of FIG. 3, the second substrate 120 is disposed between a transparent conductive layer 350 and a reflective layer 340. Specifically, the transparent conductive layer 350 is disposed between the electrochromic material layer EC and the auxiliary reflective layer 360, and the auxiliary reflective layer 360 is disposed between the reflective layer 340 and the second substrate 120. Specifically, the reflective layer 340 is disposed on the surface of a side of the auxiliary reflective layer 360 distant from the second substrate 120. In the present embodiment, the auxiliary reflective layer 360 can be used as an adhesion layer between the reflective layer 340 and the second substrate 120 to facilitate the adhesion of the reflective layer 340 on the second substrate 120. Moreover, since the reflective layer 340 is disposed further from the electrochromic material layer EC, in comparison to the driving auxiliary apparatus 100, the driving auxiliary apparatus 300 has higher yield.

FIG. 4 shows a cross-sectional diagram of a driving auxiliary apparatus of yet another embodiment of the invention. Please refer to FIG. 4. A driving auxiliary apparatus 400 of the embodiment of FIG. 4 is similar to the driving auxiliary apparatus 300 of the embodiment of FIG. 3. The driving auxiliary apparatus 400 of the embodiment of FIG. 4 and components and relevant descriptions thereof are as provided for the driving auxiliary apparatus 300 of the embodiment of FIG. 3 and are not repeated herein. The difference of the driving auxiliary apparatus 400 of the embodiment of FIG. 4 and the driving auxiliary apparatus 300 of the embodiment of FIG. 3 is as described below. A rear-view mirror 400A of the driving auxiliary apparatus 400 of the embodiment of FIG. 4 does not have the auxiliary reflective layer 360 of the embodiment of 3.

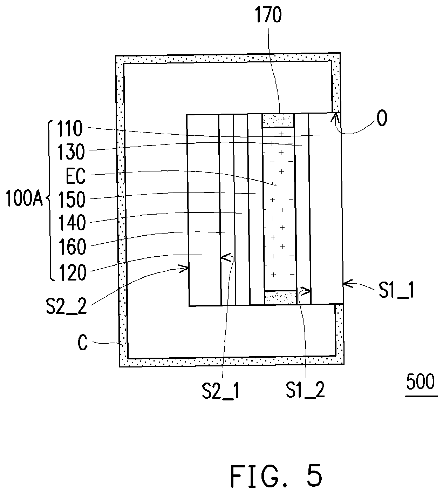

FIG. 5 shows a cross-sectional diagram of a driving auxiliary apparatus of another embodiment of the invention. Please refer to FIG. 5. A driving auxiliary apparatus 500 of the embodiment of FIG. 5 is similar to the driving auxiliary apparatus 100 of the embodiment of FIG. 1A to FIG. 1B. The driving auxiliary apparatus 500 of the embodiment of FIG. 5 and components and relevant descriptions thereof are as provided for the driving auxiliary apparatus 100 of the embodiment of FIG. 1A to FIG. 1B and are not repeated herein. The difference of the driving auxiliary apparatus 500 of the embodiment of FIG. 5 and the driving auxiliary apparatus 100 of the embodiment of FIG. 1A to FIG. 1B is as described below. In the present embodiment, the driving auxiliary apparatus 500 does not include the display D. Specifically, in a related embodiment, the display D can be optionally disposed in the driving auxiliary apparatus 500 to provide driving information or traffic information to the car driver, or the display D can also not be disposed in the driving auxiliary apparatus 500, and the invention is not limited thereto.

Specifically, in the driving auxiliary apparatus 200, the driving auxiliary apparatus 300, the driving auxiliary apparatus 400, and the driving auxiliary apparatus 500 of the embodiments of FIG. 2 to FIG. 5, the transparent conductive layer 150 (the transparent conductive layer 350) is disposed between the electrochromic material layer EC and the reflective layer 140 (the reflective layer 340), and therefore when the electrochromic material layer EC is made from an organic material, the transparent conductive layer 150 (the transparent conductive layer 350) can prevent corrosion to the reflective layer 140 (the reflective layer 340) from the organic material. In these embodiments, the driving auxiliary apparatus 200, the driving auxiliary apparatus 300, the driving auxiliary apparatus 400, and the driving auxiliary apparatus 500 can at least obtain the effects of the driving auxiliary apparatus 100 of FIG. 1A to FIG. 1B and have longer service lives.

Based on the above, in the driving auxiliary apparatus and the rear-view mirror of an embodiment of the invention, the transparent conductive layer is disposed between the electrochromic material layer and the reflective layer. The reflective layer can drive the electrochromic material layer with the light-transmitting electrode via the transparent conductive layer such that the electrochromic material layer is in a dimming state, and external light can also be reflected on the reflective layer after passing through the transparent conductive layer and then exit the rear-view mirror after passing through the transparent conductive layer. Moreover, when the electrochromic material layer is made from an organic material, the transparent conductive layer can prevent direct contact between the electrochromic material layer and the reflective layer so as to prevent corrosion to the reflective layer from the organic material. As a result, the driving auxiliary apparatus and the rear-view mirror have longer service lives.

## Claims

1. A rear-view mirror (100A, 200A, 300A, 400A) installed in a transport vehicle, the rear-view mirror (100A, 200A, 300A, 400A) comprising:
a first substrate (110);
a second substrate (120) opposite to the first substrate (110);
an electrochromic material layer (EC) disposed between the first substrate (110) and the second substrate (120);
a light-transmitting electrode (130) disposed between the first substrate (110) and the electrochromic material layer (EC);
a reflective layer (140, 340), wherein the electrochromic material layer (EC) is disposed between the first substrate (110) and the reflective layer (140, 340); and
a transparent conductive layer (150, 350) disposed between the electrochromic material layer (EC) and the reflective layer (140, 340).

2. The rear-view mirror (100A, 200A, 300A, 400A) of claim 1, wherein the first substrate (110) has a surface (S1_1) distant from the second substrate (120), an external light (L1) enters the rear-view mirror (100A, 200A, 300A, 400A) from the surface (S1_1), and the rear-view mirror (100A, 200A, 300A, 400A) reflects the external light (L1) such that the external light (L1) exits the rear-view mirror (100A, 200A, 300A, 400A) from the surface (S1_1), wherein a reflectance of the rear-view mirror (100A, 200A, 300A, 400A) to the external light (L1) is greater than 45%.

3. The rear-view mirror (100A, 200A, 300A, 400A) of claim 1, further comprising an auxiliary reflective layer (160, 360) disposed between the reflective layer (140, 340) and the second substrate (120).

4. The rear-view mirror (100A, 200A, 300A, 400A) of claim 3, wherein the auxiliary reflective layer (160, 360) contains at least one material selected from the group consisting of chromium, titanium, and molybdenum or an alloy thereof, or contains silicon dioxide or a transparent conductive material.

5. The rear-view mirror (100A, 200A, 300A, 400A) of claim 1, wherein the second substrate (120) is disposed between the transparent conductive layer (150, 350) and the reflective layer (140, 340).

6. The rear-view mirror (100A, 200A, 300A, 400A) of claim 1, wherein the reflective layer (140, 340) contains at least one material selected from the group consisting of silver, copper, aluminum, titanium, and molybdenum or an alloy thereof.

7. The rear-view mirror (100A, 200A, 300A, 400A) of claim 1, wherein the transparent conductive layer (150, 350) contains at least one material selected from the group consisting of indium tin oxide and fluorine-doped tin oxide.

8. A driving auxiliary apparatus (100, 200, 300, 400, 500) installed in a transport vehicle, the driving auxiliary apparatus (100, 200, 300, 400, 500) comprising:
a rear-view mirror (100A, 200A, 300A, 400A), comprising:
a first substrate (110);
a second substrate (120) opposite to the first substrate (110);
an electrochromic material layer (EC) disposed between the first substrate (110) and the second substrate (120);
a light-transmitting electrode (130) disposed between the first substrate (110) and the electrochromic material layer (EC);
a reflective layer (140, 340), wherein the electrochromic material layer (EC) is disposed between the first substrate (110) and the reflective layer (140, 340); and
a transparent conductive layer (150, 350) disposed between the electrochromic material layer (EC) and the reflective layer (140, 340); and
a display (D) disposed adjacent to the rear-view mirror (100A, 200A, 300A, 400A) and located at a side of the second substrate (120) distant from the first substrate (110).

9. The driving auxiliary apparatus (100, 200, 300, 400, 500) of claim 8, wherein the first substrate (110) has a surface (S1_1) distant from the second substrate (120), an external light (L1) enters the rear-view mirror (100A, 200A, 300A, 400A) from the surface (S1_1), the rear-view mirror (100A, 200A, 300A, 400A) reflects the external light (L1) such that the external light (L1) exits the rear-view mirror (100A, 200A, 300A, 400A) from the surface (S1_1), the display (D) is used to emit an image light (IL), and the image light (IL) exits the rear-view mirror (100A, 200A, 300A, 400A) from the surface (S1_1) after passing through the rear-view mirror (100A, 200A, 300A, 400A), wherein a reflectance of the rear-view mirror (100A, 200A, 300A, 400A) to the external light (L1) is greater than 40%, and a transmittance of the rear-view mirror (100A, 200A, 300A, 400A) to the image light (IL) is greater than 15%.

10. The driving auxiliary apparatus (100, 200, 300, 400, 500) of claim 8, wherein the rear-view mirror (100A, 200A, 300A, 400A) further comprises an auxiliary reflective layer (160, 360) disposed between the reflective layer (140, 340) and the second substrate (120).

11. The driving auxiliary apparatus (100, 200, 300, 400, 500) of claim 10, wherein the auxiliary reflective layer (160, 360) contains at least one material selected from the group consisting of chromium, titanium, aluminum, molybdenum, and silver or an alloy thereof, or contains silicon dioxide or a transparent conductive material.

12. The driving auxiliary apparatus (100, 200, 300, 400, 500) of claim 8, wherein the second substrate (120) is disposed between the transparent conductive layer (150, 350) and the reflective layer (140, 340).

13. The driving auxiliary apparatus (100, 200, 300, 400, 500) of claim 8, wherein the reflective layer (140, 340) contains at least one material selected from the group consisting of silver, copper, aluminum, titanium, and molybdenum or an alloy thereof.

14. The driving auxiliary apparatus (100, 200, 300, 400, 500) of claim 8, wherein the transparent conductive layer (150, 350) contains at least one material selected from the group consisting of indium tin oxide and fluorine-doped tin oxide.
